# EUROPEAN PATENT APPLICATION

(11) **EP 1 791 300 A1**
(43) Date of publication of application: **30.05.2007**
(21) Application number: 05785080.2
(22) Date of filing: 14.09.2005
(51) Int. Cl.: H04L 12/28

(54) **A METHOD FOR FORWARDING ROUTE IN THE NETWORK**

(30) Priority: 15.09.2004 CN 200410077827
(71) Applicant: Huawei Technologies Co., Ltd., Longgang District, Shenzhen Guangdong 518129 (CN)
(72) Inventor: LI, Defeng, Huawei Administration Building, Shenzhen, Guangdong 518129 (CN)
(74) Representative: Manitz, Finsterwald & Partner GbR
(86) International application number: PCT/CN2005/001474
(87) International publication number: WO 2006/029572

(57) **Abstract**

The embodiments of the present invention provide a method for routing and forwarding in a network, which includes: establishing a logical bearer network according to characteristics of node devices in a network and tunnel types supported by the node devices; designating a transmission path in the logical bearer network for user traffic, and notifying an edge node at an originating end of the transmission path of information of the transmission path; pushing the information of the transmission path into a packet of the user traffic, and forwarding the packet according to the information of the transmission path to an edge node at a terminating end of the transmission path. Since the information of the transmission path is allocated according to characteristics of each node device to be passed through, each node device may meet the requirements of forwarding the user traffic. Since the tunnel technique may be flexibly used according to real device conditions of the network, less functions of the network is required and it is unnecessary for devices in the network to support the multi-layer MPLS label, thereby simplifying network designs and the complexity of the resource assignment in the bearer control layer, and improving stability and maintainability of the network.

## Description

### Field of the Invention

The present invention relates to routing techniques, and more particularly, to a method for routing and forwarding in a network.

### Background of the Invention

Along with the development of the Internet, various network services and advanced multimedia systems are emerging. Being sensitive to such network characteristics as transmission delay and delay jitter, a real-time service may be affected greatly if a service, e.g., the File Transfer Protocol (FTP) with high burst or the Hypertext Transfer Protocol (HTTP) containing image files, is applied in the network. Furthermore, it is difficult to reliably transfer a key service requiring a transmission guarantee in the existing network because large bandwidth is occupied by multimedia services. Therefore, various techniques for assuring Quality of Service (QoS) are proposed to guarantee a reliable transmission of key services. For example, the Internet Engineering Task Force (IETF) put forward many service models and mechanisms to meet demands of QoS. At present, what is recognized in the field is to adopt an Integrated Service (Int-Serv) model at the access to or the border of a network and adopt a Differentiated Service (Diff-Serv) model at the core of the network.

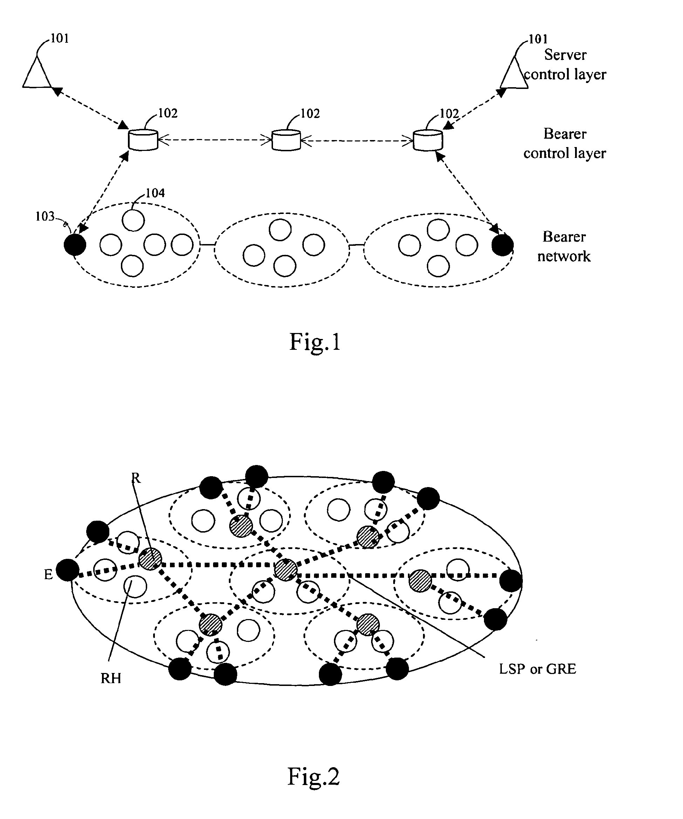

The Diff-Serv model guarantees the QoS only by setting priorities. Though with high line utilization efficiency, it is hard to predict specific effects of the Diff-Serv model. Therefore, a separate bearer control layer and a special Diff-Serv QoS signalling mechanism are set up for the Diff-Serv model of a backbone network, and a resource management layer is set up to manage topology resources of the network. The resource management Diff-Serv mode is called a Diff-Serv model having a separate bearer control layer. Fig.1 shows a simplified schematic diagram of the Diff-Serv model having a separate bearer control layer. In Fig.1, 101 is a service server, which belongs to the service control layer and may implement functions of a soft-switch, such as a Calling Agent (CA); 102 is a bearer network resource manager belonging to the bearer control layer; 103 is an Edge Router (ER) and 104 is a Core Router, both of which belong to the bearer network. In this model, the bearer network resource manager is used for configuring management rules and network topologies, and assigning resource for a service bandwidth application of user traffic. The service bandwidth application, the service bandwidth application response, and information of a path allocated by each bearer network resource manager for the service bandwidth application is delivered between bearer network resource managers in each management domain through signallings. When dealing with a service bandwidth application of user traffic, the bearer control layer determines a path for the user traffic, and the bearer network resource manager will notify the ER to forward the user traffic according to the determined path. At present, the Multi-protocol Label Switching (MPLS) is utilized for the bearer network to forward the user traffic using the designated routing according to the path determined by the bearer control layer, i.e., building a Label Switched Path (LSP) along the path determined by the bearer control layer using a resource reservation mode, and building an end-to-end LSP using an explicit routing mechanism of the Resource Reservation Protocol-Traffic Engineering (RSVP-TE) or Constraint-based Label Distribution Protocol (CR-LDP).

The conventional method of routing in an MPLS bear network is implemented as follows: establishing a logical bearer network composed of LSPs on a basic network using the MPLS technique; the bearer control layer allocating a path for user traffic in the MPLS logical bearer network, notifying the ER of a label stack of all LSPs included in the path, and pushing into a packet of the user traffic the label stack corresponding to the LSPs designated by the bearer control layer for the user traffic at an originating end of the path, i.e., an ER; the ER forwarding the packet according to stack-top label information in the label stack, and one layer of the label stack is deleted from the label stack when the packet passes through a transit router. In this way, the user traffic in the bearer network may be forwarded according to the path designated by the bearer control layer.

The above-mentioned routing method requires that all ERs and transit routers of the bearer network support the MPLS technique and the multi-layer MPLS label stack, which is very demanding on the existing bearer networks of many operators. Many nodes need to be upgraded into devices supporting the MPLS technique, especially supporting the multi-layer label stack, that is, characteristics of node devices about whether the MPLS is supported must be taken into account. This brings great problem to the inter-connection of different manufacturers' equipment and thus makes the routing method more difficult to implement.

### Summary of the Invention

The embodiments of the present invention provide a method for routing and forwarding in a network to implement the source routing without upgrading node devices in a larger scale network.

A method for routing and forwarding includes:
establishing a logical bearer network according to characteristics of node devices in a network and tunnel types supported by the node devices;
designating a transmission path in the logical bearer network for user traffic, and notifying an edge node at an originating end of the transmission path of information of the transmission path; and
pushing the information of the transmission path into a packet of the user traffic, and forwarding the packet according to the information of the transmission path to an edge node at a terminating end of the transmission path.

The transmission path includes at least one of a Label Switched Path (LSP), a Generic Routing Encapsulation (GRE) tunnel, a Layer 2 Tunnelling Protocol Version 3 (L2TPv3) tunnel and an Internet Security (IPSec) tunnel.

The information of the transmission path is pushed into the packet of the user traffic in a layered format.

The packet is forwarded according to stack-top information, and the stack-top information is deleted when the packet passes one transit node.

If a penultimate hop popping function is configured at a router supporting the one LSP, the stack-top information is popped by the penultimate node in the one LSP.

The stack-top information is popped by the last node in the one LSP.

LSP information in the information of the transmission path includes a global label or/and a port local label.

The method further includes:
when a part of labels in the information of the transmission path is the port local label,
configuring a mapping relationship between the port local label and forwarding information in a transit node in the logic bearer network;
acquiring, by the transit node, the forwarding information corresponding to the port local label on the top of the information of the transmission path according to the mapping relationship configured in the transit node when receiving the packet, and forwarding the packet according to the forwarding information.

In the embodiments of the present invention, a logical bearer network composed of LSPs is established using the MPLS LSP/GRE hybrid tunnel technique. After allocating a path in the logical bearer network for user traffic, the bearer control layer notifies an ER of path information of all tunnels included in the path, and pushes into a packet of the user traffic the path information of the designated tunnels at an originating end of the path, thereby implementing source routing to guarantee the QoS of the user traffic. Since the path is allocated according to characteristics of each node device to be passed through by the packet, each node device may meet the demands of forwarding the packet. The hybrid tunnel technique may flexibly use the LSP tunnel and the GRE tunnel according to real device conditions in the network. In this way, less functions of the network is required and it is unnecessary for devices in the network to support the multi-layer MPLS label, thereby providing a feasible scheme for the inter-working between networks. Furthermore, in the embodiments of the present invention, a relative static tunnelled logical bearer network is established, which may simplify network designs and the complexity of the resource assignment in the bearer control layer, and improve stability and maintainability of the network. Moreover, the logical bearer network and the user traffic in the network may be maintained and designed separately.

### Brief Description of the Drawings

Fig. 1 is a simplified schematic diagram illustrating a conventional network model having a separate bearer control layer.
Fig. 2 shows a simplified logical bearer network established using an MPLS LSP/GRE hybrid tunnel technique according to an embodiment of the present invention.
Fig. 3 is a simplified schematic diagram illustrating a traffic path in a logical bearer network according to an embodiment of the present invention.
Fig. 4 is a simplified schematic diagram illustrating routing in which a Penultimate Hop Popping (PHP) function of a label is not configured and an LSP uses a global label stack according to an embodiment of the present invention.
Fig. 5 is a simplified flow chart of the routing method shown in Fig. 4 according to an embodiment of the present invention.
Fig. 6 is a simplified schematic diagram illustrating routing in which a PHP function of a label is configured and an LSP uses a global label stack according to an embodiment of the present invention.
Fig. 7 is a simplified schematic diagram illustrating a label cross-connection entry configured at other ports by a transit router for an LSPb of using a port local label according to an embodiment of the present invention.
Fig. 8 is a simplified schematic diagram illustrating routing in which a PHP function of a label is not configured and an LSP uses a port local label according to an embodiment of the present invention.
Fig. 9 is a simplified schematic diagram illustrating routing in which a PHP function of a label is configured and an LSP uses a port local label according to an embodiment of the present invention.

### Detailed Description of the Invention

The embodiments of the present invention are hereinafter described in detail with reference to the accompanying drawings.

The embodiments of the present invention include: a bearer network establishes a logical bearer network according to multiple tunnel techniques; a bearer control layer allocates a path for user traffic according to characteristics of network device nodes and tunnel types supported by the network device nodes, and the path may include tunnels of multiple types. After allocating the path composed of serially connected tunnels of multiple types in the logical bearer network for user traffic, the bearer control layer notifies the ER of the information of the path, and pushes into a packet of the user traffic layered routing information corresponding to the path of forwarding the user traffic at an originating end of the path, i.e., the ER. When the user traffic is forwarded, a node device supporting an LSP function configured statically and a general MPLS forwarding function needs to forward the user traffic only according to an outer-layer label. The node device which does not support the MPLS function needs to forward the user traffic according to a GRE tunnel Header in the information of the path corresponding to the network segment. Each intermediate transit router passed through by the user traffic forwards the packet according to the outer-layer routing information. Moreover, one layer of the information of the path is deleted from the information of the path when one transit router is passed through. The multiple tunnel techniques mentioned herein may include the MPLS, GRE tunnel, L2TPv3, IPSec tunnel technique, etc.

The technical solutions of the present invention are hereinafter further described through specific embodiments.

An embodiment describes the technical solution of the present invention by taking a network composed of node devices respectively supporting the MPLS technique and GRE tunnel technique as an example.

In order to implement the source routing based on the MPLS label and the GRE tunnel to guarantee the QoS, it is needed to configure a logical bearer network in an IP basic network for real-time services requiring an assurance of the QoS.

Fig. 2 shows a simplified bearer logical network established using an MPLS LSP/GRE hybrid tunnel technique. As shown in Fig. 2, the logic bearer network is composed of edge nodes, intermediate transit nodes, and logic connections between nodes. The edge nodes in the logic bearer network refer to Edge Routers (E). Some of core routers may be selected within the resource management domain of each IP network to serve as the intermediate transit nodes, i.e., transit node routers (R). Further, the LSP tunnel is used at the network segment supporting the MPLS technique, while the GRE tunnel is used at the network segment which does not support the MPLS technique. The "MPLS in GRE" technique is used to connect tunnels of different types. These edge nodes/intermediate transit nodes and LSP tunnels/GRE tunnels constitute the logical bearer network for transferring the user traffic, which is also called a tunnelled logical bearer network.

In the above logical bearer network, the bearer control layer selects a path for user traffic, and notifies the ER in the logic bearer network of the information of the path. The path selected may include one or more label stacks and one or more GRE tunnels. When the user traffic enters the ER, the ER forwards the user traffic according to the information of the path allocated by the bearer control layer. In detail, after receiving the user traffic, the ER, according to a bearer control layer command, pushes into a packet of the user traffic the layered path information corresponding to the forwarding path of the user traffic. One layer of the path information is deleted from the layered path information when the packet passes through one intermediate transit router, that is, an MPLS label is popped or a segment of the GRE tunnel is un-encapsulated. Therefore, the pre-configured source routing and forwarding may be implemented as long as the intermediate transit router supports the MPLS forwarding function or GRE tunnel function supported by the network segment corresponding to the intermediate transit router.

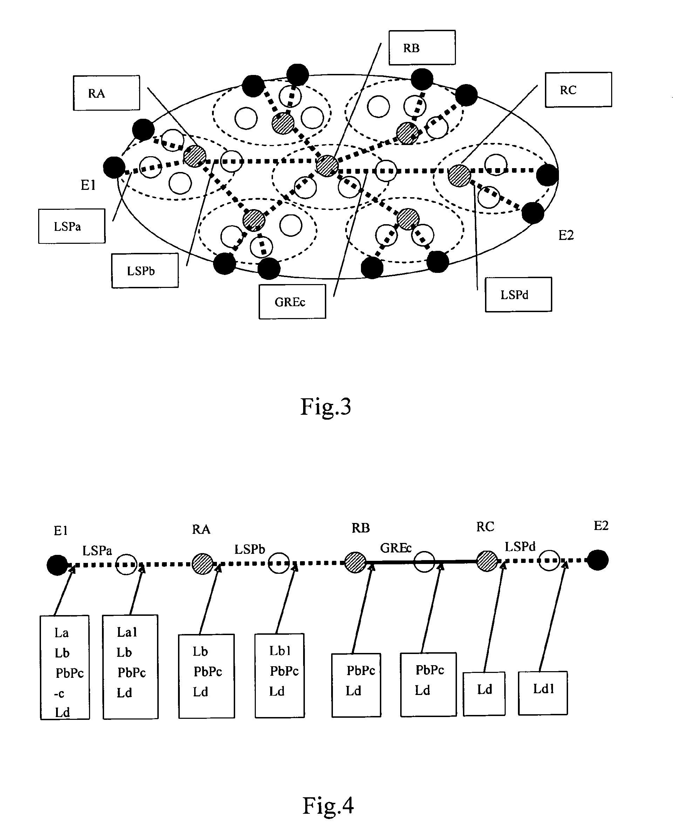

Fig. 3 shows a simplified traffic path in the logical bearer network. In Fig. 3, E1 and E2 are respectively two ERs, between which there are some core routers. There is user traffic from E1 to E2. The path allocated by the bearer control layer for the user traffic is: E1-LSPa->transit router RA-LSPb->transit router RB-GRE tunnel GREc->transit router RC-LSPd->E2.

In each transit router in the path, the label corresponding to the LSP may be set as a global label or a port local label. With respect to the LSP set as a port local label, a corresponding label cross-connection entry needs to be configured at every possible ingress port of the originating-end transit router of the user traffic. After selecting the path, the bearer control layer needs to select labels designated by the label cross-connection entry of the ingress port of the transit router according to the path information for the LSP which is included in the path and uses a port local label. The router in the logical bearer network may be configured with a Penultimate Hop Popping (PHP) function or not. If the PHP function is configured, a penultimate-hop router of an LSP will pop the stack-top label of the LSP. For the sake of convenient maintenance, it is better to use the global label for the LSP in the logical bearer network. Moreover, in order to guarantee the QoS, the PHP function is not recommended.

The routing method in accordance with the embodiments of the present invention is hereinafter illustrated with regard to different situations of the label PHP function being used or not and/or the global label stack of the LSP being used or not.

In the first situation, the label PHP function is not used, and an LSP uses the global label stack.

As shown in Fig. 4, the global label of LSPa at E1 is La; the global label of LSPb at RA is Lb; the global label of LSPd at RC is Ld; and GREc terminates LSPb at RB. A source address and destination address in the "Header" of the GRE tunnel are also configured to enable the RB to implement GREc tunnel encapsulation. The source address refers to the port address Pb for establishing the GREc tunnel in the RB, and the destination address means the port address Pc for establishing the GREc tunnel in the RC. In this way, the path information of the path LSPa->LSPb->GREc->LSPd determined by the bearer control layer is La/Lb/PbPc/Ld, which includes two MPLS label stacks and a tunnel address pair. One of the label stacks includes La and Lb, in which La is the stack-top label, and Lb is the stack-bottom label; the other one of the label stacks includes a single label, Ld; and the tunnel address pair includes Pb and Pc.

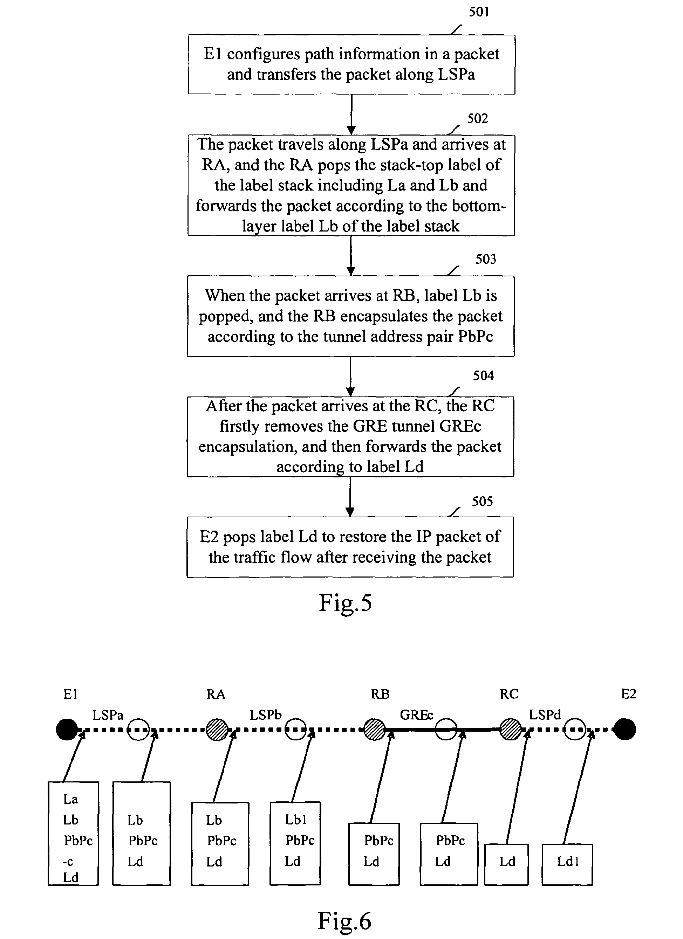

With reference to Fig. 5, the process of forwarding user traffic according to an embodiment is as follows:
Step 501: a packet of the user traffic arrives at ER E1, E1 configures a path identifier La/Lb/PbPc/Ld in the packet according to a bearer control layer command, and then E1 transfers the packet along LSPa. LSPa may pass through some routers which forward the packet just according to the stack-top label, and may perform stack-top label switching.
Step 502: the packet travels along LSPa and arrives at the transit router RA. The RA pops the stack-top label of the label stack including La and Lb, and forwards according to the bottom-layer label of the label stack including La and Lb, Lb, since LSPa is terminated at the RA, and then, the RA forwards the packet along LSPb.
Step 503: when the packet arrives at the RB, label Lb is popped. The RB, according to the tunnel address pair PbPc, encapsulates the packet, that is, constructs an IP Header according to the tunnel address pair, constructs a GRE Header according to RFC 1701 and RFC 2784, and transparently transfers the GRE tunnel data containing the MPLS label Ld to the RC. Merely by way of an example, the protocol type in the IP Header is "47" (means that the data is GRE tunnel data).
Step 504: after the packet arrives at the RC, the RC firstly removes the GRE tunnel GREc encapsulation, and then forwards the packet according to Ld. Thus, the packet may be forwarded along LSPd at the RC. LSPd may pass through some routers which may perform label switching. By doing so, the packet may arrive at destination ER E2 along LSPd.
Step 505: since LSPd is terminated at E2, E2 pops Ld to restore the IP packet of the user traffic after receiving the packet.

In the second situation, the penultimate-hop routers of some LSPs included in the path are configured with the PHP function, and the LSPs use the global label stack.

Fig. 6 shows a simplified forwarding process in case that LSPa is configured with the PHP function. Under this condition, the forwarding process is similar to the first situation. The difference between the two situations is that the router where the LSP is terminated pops the stack-top label in the first situation, and in the second situation, the router where the LSP is terminated does not pop the label while the router prior to the one where the LSP is terminated pops the stack-top label.

In the third situation, labels allocated to some LSPs included in the path are limited to router ports, i.e., port local labels, and the transit router is not configured with the PHP function.

Referring to Fig.3 again, LSPb starts from a certain port X2 at the RA, and the label of X2 is Lb. LSPd starts from a certain port X4 at the RC, and the label of X4 is Ld. In this case, since labels of some LSPs are limited to the router ports, the bearer control layer may not simply notify the ER of the port local label of each LSP. If a packet of user traffic with a port local label arrives at a corresponding router, the processing as follows is needed.

In order to forward, by means of an MPLS standard forwarding procedure, the MPLS packets entered from other ports to the next LSP using a port local label, an Input Label Mapping (ILM) table of each port needs to be set for the transit router, and the specific method of setting the ILM table includes: an entry is added to the ILM table of every possible ingress port for each LSP using a port local label, that is, each ingress port is allocated a new label. The ILM entry corresponding to the label points to a Next Hop Label Forwarding Entry (NHLFE) which is the LSP entry using a port local label. The ILM entry of the ingress port may be called an LSP label cross-connection entry.

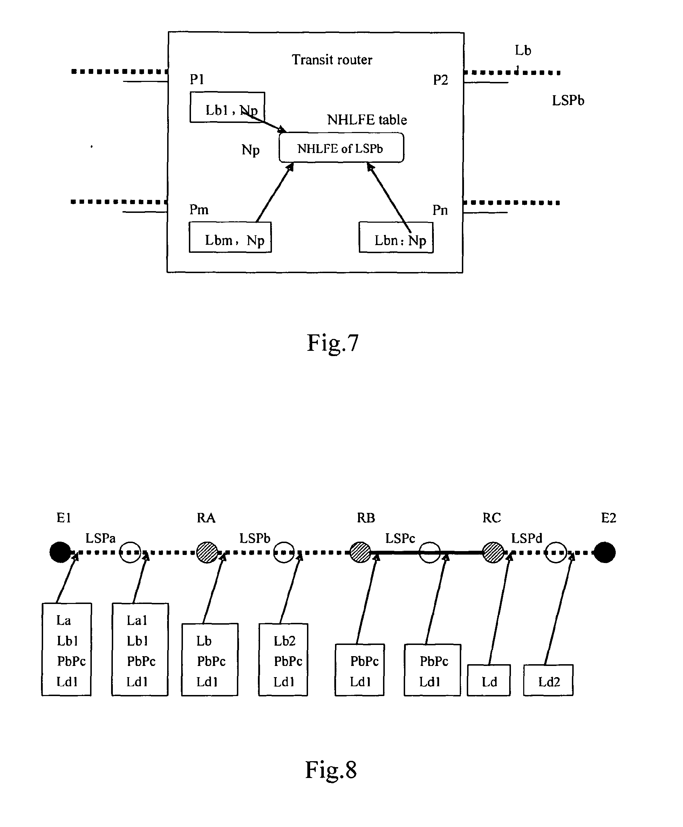

Fig. 7 is a simplified diagram illustrating a label cross-connection entry configured at other ports by a transit router for LSPb using a port local label.

As shown in Fig. 7, a transit router is an originating end of LSPb, and LSPb uses a port local label Lb at port P2. The Np entry in the NHLFE table of the router stores the forwarding information of LSPb.

In order to forward a packet of user traffic entering through port P1 to LSPb, it is needed to add one entry to the ILM table of the port P1, the label allocated for the entry is Lb1 and points to the entry whose NHLFE is Np, i.e., the forwarding information of LSPb. By analogy, it is needed to add respectively one entry in the ILM tables of ports Pm and Pn to forward the packet entered from the Pm and the Pn to LSPb. Labels corresponding to the entries are respectively Lbm and Lbn, and Lbm and Lbn point to the entry whose NHIFE is Np.

So, the logic bearer network has to pre-configure a label cross-connection entry at the originating-end transit router of the LSP using a port local label. By doing so, during the procedure of the bearer control layer determining a forwarding label stack along the path of the user traffic, the bearer control layer in turn puts into the bottom of the label stack the label number of the label cross-connection entry which points to the LSP and is configured at the ingress port of the path of the user traffic by the originating-end transit router when dealing with the LSPs using port local labels.

For example, if the LSP included in the path of the user traffic between E1 and E2 is allocated a port local label, LSPb starts from a certain port X2 at the RA, and the label of X2 is Lb. LSPd starts from a certain port X4 at the RC, and the label of X4 is Ld.

The bearer network configures a cross-connection entry for the LSPs using port local labels in advance. The port local label of the cross-connection entry to LSPb, allocated by the transit router RA for an ingress port of LSPa, is Lb1. The port local label of the cross-connection entry to LSPd, allocated by the transit router RC for an ingress port of GREc, is Ld1. Consequently, the path information of forwarding the user traffic according to the path LSPa->LSPb->GREc->LSPd is La/Lb1/PbPc/Ld1, and includes two MPLS label stacks and one tunnel address pair (composed of Pb and Pc). One of the label stacks is composed of La/Lb1, the La is the stack-top label, and the Lb1 is the stack-bottom label. The other one of the label stacks is composed of a single label Ld1.

Thus, when there is an LSP using a port local label, the path information of forwarding the user traffic shown in Fig. 4 on the bearer network is as shown in Fig. 8 if the network has not been configured with the PHP function, the specific procedure is as follows.

The packet arrives at ER E1, E1, according to a bearer control layer command, puts the information of the path La/Lb1/PbPc/Ld1 into the packet, and transfers the packet along LSPa. LSPa may pass through some routers, and these routers forward the traffic data traffic just according to the stack-top label, and may perform stack-top label switching. The packet arrives at the transit router RA along LSPa.

When dealing with the stack-top label, the RA pops the stack-top label and forwards the packet according to the next layer label Lb1 since LSPa is terminated at the RA. As Lb1 is a label cross-connection entry configured at the ingress port for LSPb, the packet will be forwarded along LSPb at the RA. LSPb may pass through some routers which forward the packet to the RB according to the current stack-top label.

When receiving the packet, the router RB pops the label Lb. The bearer control layer instructs the RB to perform GRE encapsulation according to a tunnel address pair PbPc when determining the path of the packet flow, and the RB constructs an IP Header according to the tunnel address pair PbPc, constructs a GRE Header according to RFC 1701 and RFC 2784, and transparently transfers the GRE tunnel data including the MPLS label Ld to RC. Merely by way of an example, the protocol type in the IP Header is "47" (means the data is GRE tunnel data).

When the packet arrives at the RC, the RC removes GRE tunnel GREc encapsulation, and then forwards the packet according to the stack-top label Ld after removing the encapsulation. In this way, the packet may be forwarded along LSPd at the RC. LSPd may pass through some routers which may perform label switching. By doing so, the packet may arrive at the destination ER E2 along LSPd. After receiving the packet, E2 pops the label Ld to restore IP packets of the user traffic since LSPd is terminated at E2.

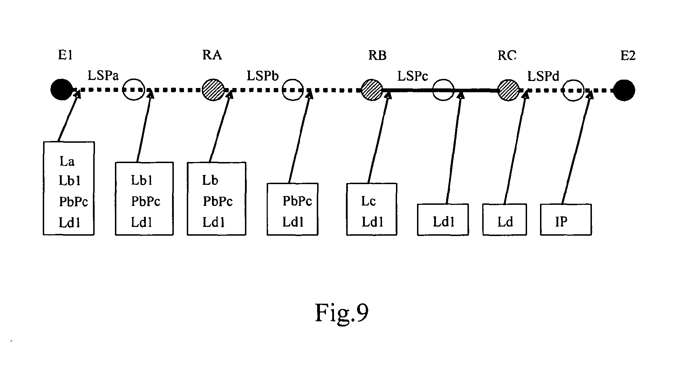

In the fourth possible situation, a port local label is used and the PHP function is configured for transit routers. The difference between this situation and the above situation is that the penultimate-hop router of the LSP pops the stack-top label. The forwarding procedure is as shown in Fig. 9 when a port local label is used and the PHP function is configured for transit routers.

Additionally, it is needed to implement an MPLS-in-GRE encapsulation at the RC since the packet with the MPLS label Ld are transparently transferred through GREc in the above procedure.

As shown in Table 1, the structure of MPLS-in-GRE encapsulation includes an IP Header, GRE Header, MPLE Label Stack, and Message Body.

**Table 1**

| |
|---|
| IP Header |
| GRE Header |
| MPLS Label Stack |
| Message Body |

The IP Header is constructed according to a tunnel address pair PbPc, and the difference between it and ordinary IP header is that the protocol type field thereof is set as "47", denoting GRE encapsulation. The GRE Header may be encapsulated according to the format illustrated in RFC 1701; and the MPLS label stack may be encapsulated according to RFC 3032.

**Table 2**

| C | R | K | S | s | Recur | Flags | Ver | Protocol Type | |
|---|---|---|---|---|---|---|---|---|---|
| Checksum (optional) | | | | | | | | | Offset (optional) |
| Key (optional) | | | | | | | | | |
| Sequence Number (optional) | | | | | | | | | |
| Routing (optional) | | | | | | | | | |

As shown in Table 2, the GRE Header encapsulated according to the format illustrated in RFC 1701 includes: a flag bit (Flags), version number (Ver), a protocol type (Protocol Type), a checksum (Checksum), an offset from the origination of routing domain to the first byte of the valid source routing entry (Offset), a key added for security validation (Key), a sequence number (Sequence Number), and a routing domain (Routing mentioned herein, determined whether there is the routing domain according to the configuration of a R bit; if there is the Routing domain, it is source routing entries one by one). The Checksum, Offset, Key, Sequence Number, and Routing are optional. In the embodiments of the present invention, only the configurations of "Protocol Type" and "Checksum" are concerned. If the user traffic is unicast and multicast packets of the MPLS, the "Protocol Type" in the GRE Header should be set as "Ethernet type", separately 0x8847 for unicast and 0x8848 for multicast. The field of the Checksum should be adjusted according to the GRE Header and the MPLS label stack.

The above embodiments illustrate a method for using MPLS LSP/GRE hybrid tunnel technique to divide a logical bearer network and forwarding a packet of user traffic. In a real application, other tunnels such as L2TPv3, IPSec tunnel, GRE tunnel or LSP tunnel, or one tunnel or more hybrid tunnels may be used to divide the logical bearer network and forward the user traffic, as long as node equipment in the network support the tunnel technique.

To sum up, the foregoing is only preferred embodiments of the present invention and is not for use in limiting the protection scope thereof.

## Claims

1. A method for routing and forwarding in a network, comprising:
establishing a logical bearer network according to characteristics of node devices in a network and tunnel types supported by the node devices;
designating a transmission path in the logical bearer network for user traffic, and notifying an edge node at an originating end of the transmission path of information of the transmission path; and
pushing the information of the transmission path into a packet of the user traffic, and forwarding the packet according to the information of the transmission path to an edge node at a terminating end of the transmission path.

2. The method of Claim 1, wherein the transmission path comprises at least one of a Label Switched Path (LSP), a Generic Routing Encapsulation (GRE) tunnel, a Layer 2 Tunnelling Protocol Version 3 (L2TPv3) tunnel and an Internet Security (IPSec) tunnel.

3. The method of Claim 1, wherein the information of the transmission path is pushed into the packet of the user traffic in a layered format.

4. The method of Claim 3, wherein the packet is forwarded according to stack-top information, and the stack-top information is deleted when the packet passes one transit node.

5. The method of Claim 4, wherein if a penultimate hop popping function is configured at a router supporting the one LSP, the stack-top information is popped by the penultimate node in the one LSP.

6. The method of Claim 4, wherein the stack-top information is popped by the last node in the one LSP.

7. The method of Claim 1, wherein LSP information in the information of the transmission path comprises a global label or/and a port local label.

8. The method of Claim 7, further comprising:
when a part of labels in the information of the transmission path is the port local label,
configuring a mapping relationship between the port local label and forwarding information in a transit node in the logic bearer network;
acquiring, by the transit node, the forwarding information corresponding to the port local label on the top of the information of the transmission path according to the mapping relationship configured in the transit node when receiving the packet, and forwarding the packet according to the forwarding information.
